# EUROPEAN PATENT APPLICATION

(11) **EP 3 866 002 A1**
(43) Date of publication of application: **18.08.2021**
(21) Application number: 19926895.4
(22) Date of filing: 29.04.2019
(51) Int. Cl.: G06F 9/44

(54) **VISUAL PROGRAMMING CONTROL APPARATUS, PROGRAMMABLE CONTROL DEVICE AND CONTROL METHOD THEREFOR, COMPUTER READABLE STORAGE MEDIUM, AND PROGRAMMING CONTROL SYSTEM**

(71) Applicant: SZ DJI Technology Co., Ltd., Shenzhen, Guangdong 518057 (CN)
(72) Inventor: LI, Yan, Shenzhen, Guangdong 518057 (CN); LI, Xiaojun, Shenzhen, Guangdong 518057 (CN); ZHANG, Penghui, Shenzhen, Guangdong 518057 (CN)
(74) Representative: Goddar, Heinz J.
(86) International application number: PCT/CN2019/084951
(87) International publication number: WO 2020/220184

(57) **Abstract**

Embodiments of the present invention provide a method for a visual programming control device, a visual programming control apparatus, a programming-controlled device, a computer-readable storage medium, and a programming control system. The method includes: providing a visual programming interface, where the visual programming interface includes a plurality of object blocks, and each object block is configured to associate with at least one execution component included in a device; providing a related program block for a selected object block, and generating an execution program for the selected object block based on the program block on the visual programming interface; generating, based on the execution program, a control instruction for controlling the device; and sending the control instruction to the device. The embodiments of the present invention provide support and programming control for designing a modular product.

## Description

### TECHNICAL FIELD

Embodiments of the present invention relate to the field of programming control technologies, and in particular, to a visual programming control apparatus, a programming-controlled device, a method used for a visual programming control device, a computer-readable storage medium, and a programming control system.

### BACKGROUND

With continuous development and progress of programming technologies, graphical programming tools such as Blockly and Scratch emerge in the market. Such tools break the conventional programming modes and no longer require a user to enter complex program code. The user only needs to drag a preset program module to control actions and changes of elements such as a role and a background. Even if the user has never learned programming, the user can easily complete a creative design and develop programming capabilities, so that an objective of education and teaching is achieved.

The existing graphical programming tools generally use a manner of injection to run a compiled program on hardware. However, the existing graphical programming tools do lack supports to modular products.

### SUMMARY

The present invention provides a visual programming control apparatus, a programming-controlled device, a method used for a visual programming control device, a computer-readable storage medium, and a programming control system.

According to one aspect of the embodiments of the present invention, a visual programming control apparatus is provided. The visual programming control apparatus is configured to control a device including at least one programmable execution component, the visual programming control apparatus includes: a memory, adapted to store a plurality of program instructions; a processor, wherein when the plurality of program instructions are executed by the processor, the processor is configured to: provide a visual programming interface, wherein the visual programming interface includes a plurality of object blocks, and each of the plurality of object blocks is configured to associate with the at least one execution component; provide a related program block for a selected object block, and generate an execution program for the selected object block based on the program block on the visual programming interface; and generate, based on the execution program, a control instruction for controlling the device; as well as a wireless communication module, which is configured to send the control instruction.

According to another aspect of the embodiments of the present invention, a method for a visual programming control device is provided, including the following steps: providing a visual programming interface, wherein the visual programming interface includes a plurality of object blocks, and each of the plurality of object block is configured to associate with at least one execution component included in the device; providing a related program block for a selected object block, and generating an execution program for the selected object block based on the program block on the visual programming interface; generating, based on the execution program, a control instruction for controlling the device; and sending the control instruction to the device.

According to another aspect of the embodiments of the present invention, a computer-readable storage medium is provided, which is adapted to store a plurality of program instructions, when the program instructions are executed by the processor, steps of the method for the visual programming control device as mentioned above are performed.

According to another aspect of the embodiments of the present invention, a programming-controlled device is provided. The programming-controlled device includes: at least one programmable execution component; and an intelligent control, communicatively connected to the at least one execution component, wherein the intelligent control is configured to: upload a synchronization status message indicating whether an execution component associated with an object block provided by a visual programming control apparatus has been mounted to the device; in a synchronized state in which the associated execution component has been mounted to the device, receive a control instruction from the visual programming control apparatus; and control an operation of the corresponding execution component of the device based on the control instruction.

According to another aspect of the embodiments of the present invention, a method for a visual programming controlled device is provided. The method includes: uploading a synchronization status message indicating whether an execution component associated with an object block provided by a visual programming control apparatus has been mounted to the device; in a synchronized state in which the associated execution component has been mounted to the device, receiving a control instruction from the visual programming control apparatus; and controlling an operation of the corresponding execution component of the device based on the control instruction.

According to yet another aspect of the embodiments of the present invention, a programming control system is provided. The programming control system includes: a device, including at least one programmable execution component and an intelligent control, wherein the intelligent control is communicatively connected to the at least one execution component; and a visual programming control apparatus, including: a memory, adapted to store a plurality of program instructions; a processor, wherein when the program instructions are executed by the processor, the processor is configured to: provide a visual programming interface, wherein the visual programming interface including a plurality of object blocks, and each of the plurality of object blocks is configured to associate with the at least one execution component; provide a related program block for a selected object block, and generate an execution program for the selected object block based on the program block on the visual programming interface; and generate, based on the execution program, a control instruction for controlling the device; and a wireless communication module, configured to send the control instruction to the device; wherein the intelligent control is configured to: receive the control instruction from the visual programming control apparatus; and control an operation of a corresponding execution component of the device based on the control instruction.

In the embodiments of the present invention, for a programmable hardware module, a corresponding software module associated with the programmable hardware module may be designed and developed, and programming is further performed for the software module, to generate a corresponding control instruction for controlling the programmable hardware module, thereby providing support and programming control for designing a modular product.

### BRIEF DESCRIPTION OF THE DRAWINGS

To describe the technical solutions in the embodiments of the present invention more clearly, the following briefly describes the accompanying drawings for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario of a programming control system according to an embodiment of the present invention;
FIG. 2 is a schematic block diagram of an embodiment of a programming control system according to the present invention;
FIG. 3 is a status display diagram of a visual programming interface according to an embodiment of the present invention;
FIG. 4 is another status display diagram of a visual programming interface according to an embodiment of the present invention;
FIG. 5 is a flowchart of an embodiment of a method used for a visual programming control device at a control end according to the present invention;
FIG. 6 is a flowchart of another embodiment of a method used for a visual programming control device at a control end according to the present invention;
FIG. 7 is a flowchart of another embodiment of a method used for a visual programming control device at a control end according to the present invention;
FIG. 8 is a flowchart of another embodiment of a method used for a visual programming control device at a control end according to the present invention;
FIG. 9 is a flowchart of another embodiment of a method used for a visual programming control device at a control end according to the present invention;
FIG. 10 is a flowchart of another embodiment of a method used for a visual programming control device at a control end according to the present invention;
FIG. 11 is a flowchart of an embodiment of a method used for a visual programming control device at a device end according to the present invention; and
FIG. 12 is a flowchart of another embodiment of a method used for a visual programming control device at a device end according to the present invention.

### DETAILED DESCRIPTION

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the scope of protection of the present invention.

Exemplary embodiments will be described in detail herein, and examples of the exemplary embodiments are presented in the accompanying drawings. When the following description relates to the accompanying drawings, unless otherwise specified, same numbers in different drawings represent same or similar elements. Implementations described in the following exemplary embodiments do not represent all implementations consistent with the present invention. On the contrary, they are only examples of apparatuses and methods that are described in the appended claims in detail and that are consistent with some aspects of the present invention.

The terms used in the present invention are used only to describe specific embodiments, and not intended to limit the present invention. The terms "a", "said", and "the" of singular forms used in the present invention and the appended claims are also intended to include plural forms, unless otherwise specified in the context clearly. It should also be understood that the term "and/or" used in this specification indicates and includes any or all possible combinations of one or more associated listed items. Unless otherwise specified, the terms "before", "after", "below", and/or "above", and the like are used only for ease of description, and not intended to limit a location or a spatial direction. The terms "connection" or "connected", and the like are not limited to a physical or mechanical connection, but may include an electrical connection, whether direct or indirect. The term "can" in the present invention may mean having a capability.

The embodiments of the present invention are hereinafter described in detail with reference to the accompanying drawings. Under a condition that no conflict occurs, the following embodiments and features in implementations may be combined with each other.

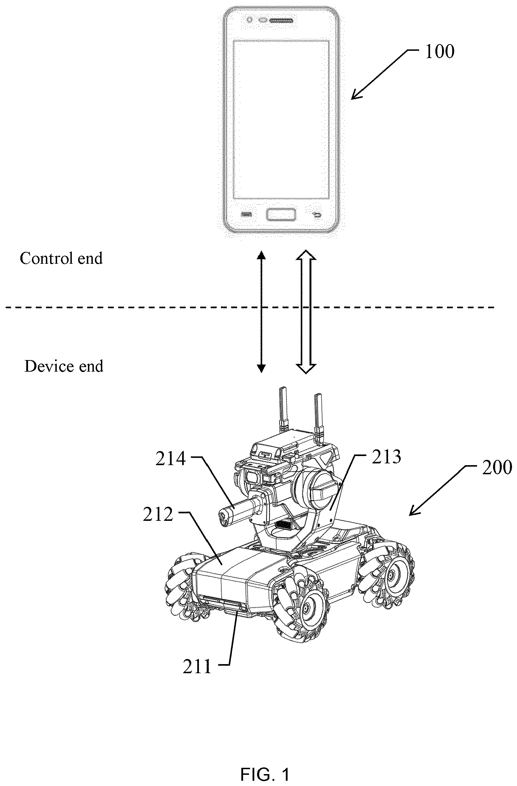

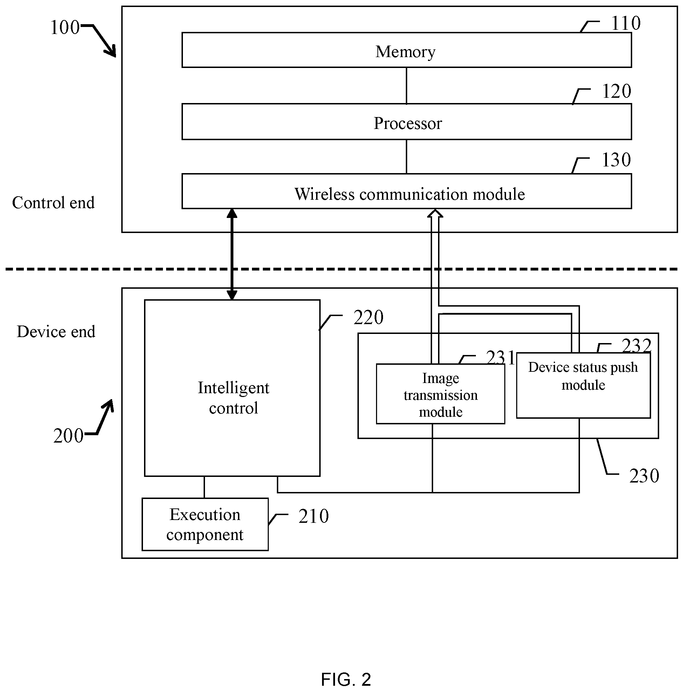

FIG. 1 is a schematic diagram of an application scenario of a programming control system according to an embodiment of the present invention. FIG. 2 is a schematic block diagram of an embodiment of a programming control system according to the present invention. As shown in FIG. 1 and FIG. 2, the programming control system in this embodiment of the present invention includes a control end and a device end. The programming control system in this embodiment of the present invention includes a visual programming control apparatus 100 at the control end. The programming control system in this embodiment of the present invention includes a programming-controlled device 200 at the device end. The visual programming control apparatus 100 may perform programming control on the device 200.

The visual programming control apparatus 100 in this embodiment of the present invention may include a mobile terminal, a personal computer, or a visual remote control. The mobile terminal may include a mobile phone, a tablet computer, or the like. The visual programming control apparatus 100 in this embodiment of the present invention is shown by using a mobile phone as an example. The device 200 in this embodiment of the present invention may include a mobile device. The device in this embodiment of the present invention is shown by using a mobile model vehicle as an example. However, the foregoing examples are intended merely for better explaining and describing the embodiments of the present invention rather than limiting the present invention.

An embodiment of the present invention may provide a visual programming control apparatus 100 at a control end. As shown in FIG. 1 and FIG. 2, the visual programming control apparatus 100 may include a memory 110 adapted to store a plurality pieces of program instructions, a processor 120, and a wireless communication module 130 (that is, a control-end wireless communication module), where the processor 120 is communicatively connected to the memory 110 and the wireless communication module 130 respectively. In some implementations, the wireless communication module 130 may be a Wi-Fi communication module. In the visual programming control apparatus 100, the wireless communication module 130 may further include a plurality of communication modules; for example, include Wi-Fi, Bluetooth, and NFC, which may be collectively referred to as the wireless communication module 130.

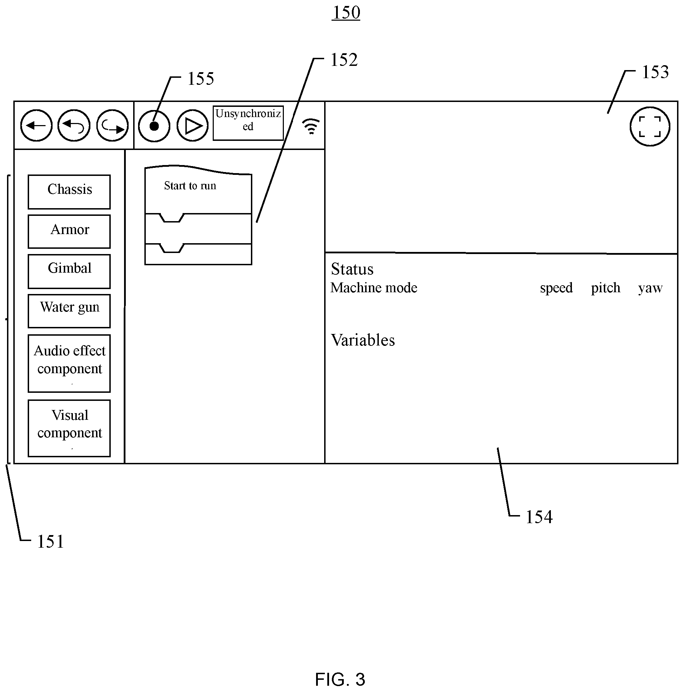

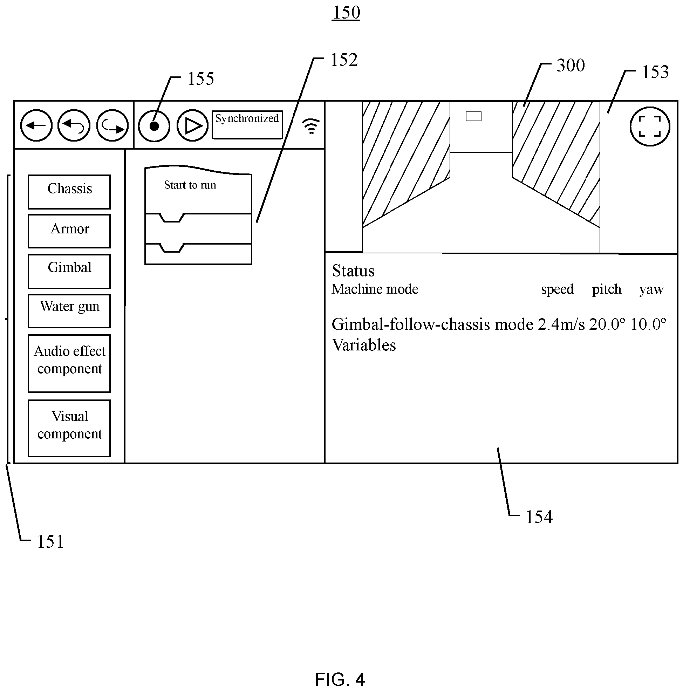

When a program instruction(s) stored in the memory 110 is executed by the processor 120, the processor 120 may provide a visual programming interface 150. To be specific, the program instruction may be executed such that a display screen of the visual programming control apparatus 100 shows the visual programming interface 150. As shown in FIG. 3 and FIG. 4, the visual programming interface 150 may include a plurality of object blocks 151, and each object block 151 is configured to associate with at least one execution component 210.

The following describes this embodiment of the present invention by using a mobile model vehicle as an example of the device 200. Certainly, the device 200 in this embodiment of the present invention may also be another device equipped with a program-controlled hardware module.

As shown in FIG. 1, a programmable execution component 210 of the mobile model vehicle may include at least one of a chassis 211, an armor 212, a gimbal 213, a water gun 214, an audio effect component (not shown), and a visual component (not shown). The programmable execution component 210 refers to a program-controlled hardware component on the device 200. Correspondingly, the object blocks 151 provided on the visual programming interface 150 may include correspondingly, a chassis object block, an armor object block, a gimbal object block, a water gun object block, an audio effect component object block, a visual component object block, and the like. The object block 151 is used as a software module, and the execution component 210 of the mobile model vehicle is used as a hardware module. The object block 151 is associated with the corresponding execution component 210, so that the hardware module is associated with the corresponding software module.

On the visual programming interface 150, a user may select a required object block 151 based on the plurality of object blocks 151 provided. When the user selects the object block 151, the processor 120 may provide a related program block 152 for the selected object block 151.

The program block 152 herein may include a programming module having a program instruction that is formed by packing program contents compiled by using different program code. Therefore, in actual use by the user, to implement a program instruction, the user does not need to compile complex program code, but only needs to click or drag different program blocks 152. This facilitates user operations, and lowers the threshold for user operations.

The processor 120 may generate an execution program for the selected object block 151 based on the program block 152 on the visual programming interface 150, where the execution program for the selected object block 151 may be visually displayed on the visual programming interface 150. In an embodiment of the present invention, the processor 120 may obtain an operation of dragging the program block 152 on the visual programming interface 150, and generate the execution program for the selected object block 151 based on a result of the operation of dragging the program block 152. For example, in an embodiment, the visual programming control apparatus 100 may be developed based on a Scratch programming framework. Therefore, by dragging program blocks 152 on the visual programming interface 150, the user may combine the program blocks 152 in a manner of, for example, placing building blocks or the like, to generate an execution program for the selected object blocks 151. Further, the processor 120 may generate, based on the execution program, a control instruction for controlling the mobile model vehicle. Herein, a manner of connecting by lines or making a flowchart or the like may also be used to combine the program blocks 152 selected by the user to generate the execution program. This is not limited in the present invention. The wireless communication module 130 may send the control instruction.

The visual programming control apparatus 100 in this embodiment of the present invention designs and develops, for a programmable execution component 210 (that is, a hardware module), an object block 151 (that is, a software module) associated with the programmable execution component, thereby associating the hardware module with the corresponding software module, and further performs programming the software module, to generate a corresponding control instruction to control the programmable hardware module, thereby providing support and programming control for designing a modular product.

In an embodiment, the processor 120 may debug the execution program, and determine that there is no inexecutable error in the execution program generated by the user by combining the program blocks. The visual programming interface 150 may be provided with a debugging button 155. After the execution program is debugged successfully, the processor 120 may generate the control instruction based on the debugged execution program. In some implementations, the control instruction may be an executable Python script. When the execution program fails to be debugged, the processor 120 may further analyze a specific error type, an error location, or the like of the program, and provide a corresponding modification suggestion. In some cases, the visual programming interface 150 may perform highlighting and other emphasis displays on a program block or program block logic with an error.

After the user generates the execution program by combining the program blocks, the visual programming control apparatus 100 may store the execution program, and generate an engineering file. The engineering file may be shared, transmitted, and recognized between different visual programming control apparatuses, and may include at least the following information: a creator, a creation time, a title, remark information, or the like. After the engineering file is recognized by the visual programming control apparatus 100, an organizational structure or a related sequence of object blocks in the original compiled execution program may be restored. In addition, the engineering file may further store software or hardware version information of the visual programming control apparatus 100 or the device 200, or may store hardware information of each execution component of the device 200. When the engineering file is shared and transmitted to another visual programming control apparatus, whether the another visual programming control apparatus satisfies a software version requirement of the engineering file may be recognized, and when the another visual programming control apparatus does not satisfy the software version requirement of the engineering file, corresponding warning information may be provided. In addition, when the visual programming control apparatus is connected to the device 200, it may further recognize hardware version information of the device 200; if the hardware version information of the device 200 does not satisfy a requirement, corresponding warning information may be provided.

In another embodiment, the processor 102 may further query a status of synchronization between the selected object block 151 and an associated execution component 210 in the mobile model vehicle, and receive a synchronization status message indicating whether the execution component 210 associated with the selected object block 151 has been mounted to the mobile model vehicle. In addition, the wireless communication module 130 may send the control instruction only when receiving the synchronization status message indicating that the associated execution component 210 has been mounted to the mobile model vehicle. Further, the processor 120 may further display "synchronized" on the visual programming interface 150 when receiving the synchronization status message indicating that the associated execution component 210 has been mounted to the mobile model vehicle, as shown in FIG. 4; and when receiving the synchronization status message indicating that the associated execution component 210 has not been mounted to the mobile model vehicle, display "unsynchronized" on the visual programming interface 150, as shown in FIG. 3. Therefore, the user can learn in time, by using the visual programming interface 150, the synchronization status indicating whether the associated execution component 210 has been mounted to the mobile model vehicle.

In another embodiment of the present invention, the processor 120 may further receive, by using the wireless communication module 130, an image shot by the mobile model vehicle, and display the image 300 in an image display area 153 of the visual programming interface 150, as shown in FIG. 4. The image 300 shown in FIG. 4 is merely intended for description, and should not be understood as a limitation on the present invention. Any image shot by the mobile model vehicle may be received based on an actual application requirement in the present invention. Optionally, the processor 120 may further perform image recognition on the received image, and then display the recognized image in the image display area 153 of the visual programming interface 150. For example, when a plurality of mobile model vehicles are in a same scene, a shot image may include other mobile model vehicles and these other mobile model vehicles in the image may be recognized and then displayed in the image display area 153 in a manner such as using a bounding box or highlighting color.

In this embodiment of the present invention, the image shot by the mobile model vehicle may be controlled by performing a programming operation on the visual component object block. For example, when the user selects the "visual component" object block, program blocks corresponding to the "visual component" may be combined on the visual programming interface 150. For example, program blocks "display image", "recognize vehicle(s) in image", and "close display image after one minute" may be combined in sequence. In this case, when the program blocks are executed in sequence, the image display area 153 may display the image and display the recognized mobile model vehicle(s), and does not display the image any longer after one minute. It needs to be understood that the program blocks herein are merely used as examples, and do not represent actual program block segmentation or logic compilation.

The visual programming control apparatus 100 in this embodiment of the present invention may combine visual programming with image transmission and displaying. The user can obtain an execution result of programming by using the image 300 displayed on the visual programming interface 150, and thus more intuitive programming operation experience is achieved.

In another embodiment of the present invention, the processor 120 may further receive, by using the wireless communication module 130, a device operation status message pushed by the mobile model vehicle, and display a device operation status in a status display area 154 of the visual programming interface 150.

For example, device operation statuses such as a machine mode, a current moving speed of the mobile model vehicle, a pitch angle of the gimbal, and yawing of the gimbal may be displayed in the status display area 154. For example, as shown in FIG. 4, a gimbal-follow-chassis mode, a speed 2.4 m/s, a pitch angle 20.0°, and yawing 10.0° are displayed in the status display area 154. Certainly, other operation statuses and variables of the mobile model vehicle may also be displayed in the status display area 154 based on an actual application requirement.

The visual programming control apparatus 100 in this embodiment of the present invention may combine visual programming with the device operation status. The user can obtain an execution result of programming by using the device operation status displayed on the visual programming interface 150, and check statuses such as whether device operation is successful. This facilitates the user in locating and analyzing a programming problem.

In another embodiment of the present invention, the processor 120 may further receive a mounting status message of the execution component 210 from the mobile model vehicle; when the execution component 210 has been mounted to the mobile model vehicle, the object block 151 associated with the execution component 210 and the program block 152 may be displayed as available on the visual programming interface 150; when the execution component 210 has not been mounted to the mobile model vehicle, the object block 151 associated with the execution component 210 and the program block 152 may be displayed as unavailable on the visual programming interface 150.

In this embodiment of the present invention, for example, when the chassis 211 of the mobile model vehicle has been mounted to the mobile model vehicle, but the gimbal 213 has not been mounted to the mobile model vehicle, the processor 120 receives a status message indicating that the chassis 211 has been mounted to the mobile model vehicle, and the chassis object block and a program block thereof may be displayed as available on the visual programming interface 150, for example, displayed in a normal color; while the processor 120 receives a status message indicating that the gimbal 213 has not been mounted to the mobile model vehicle, and the gimbal object block and a program block thereof may be displayed as unavailable on the visual programming interface 150, for example, displayed in grey.

In this embodiment of the present invention, before the user performs programming, the visual programming control apparatus 100 displays an object block 151 associated with a mounted execution component 210 and a program block 152 thereof as available, and displays an object block 151 associated with an unmounted execution component and a program block 152 thereof as unavailable. Therefore, the user can know in advance which object blocks and program blocks thereof are available, and which object blocks and program blocks thereof are unavailable. This can help the user select a valid object block 151 and valid program block 152 more intuitively, so as to avoid a subsequent process of reselecting an object block 151 and readjusting an program block 152 for programming because an execution program of a programmed object block 151 is inexecutable, thereby improving the programming efficiency.

In another embodiment of the present invention, when a new programmable execution component 210 is added to the mobile model vehicle, the visual programming control apparatus 100 may correspondingly add an object block 151 associated with the new execution component 210, to support the new execution component 210. For example, when a programmable light effect component is added to the mobile model vehicle, the visual programming control apparatus 100 may add, by performing programming in advance, a software module associated with the light effect component, and the software module is saved as a light effect component object block in the visual programming control apparatus 100. When hardware and software of a programmable execution component 210 of the mobile model vehicle are upgraded, the visual programming control apparatus 100 may perform recognition based on software and hardware versions of the execution component 210, and upgrade an object block 151 associated with the execution component 210, to support the upgraded execution component 210. For example, when hardware of a programmable gimbal of the mobile model vehicle is updated, such as, an exchange with an upgraded gimbal, the visual programming control apparatus 100 recognizes, based on a hardware version of the gimbal, whether the existing gimbal object block is compatible with the gimbal after the software update, and if not, correspondingly upgrades the existing gimbal object block, so as to support the updated gimbal.

The visual programming control apparatus 100 in this embodiment of the present invention can support extensibility of programmable execution components 210.

An embodiment of the present invention provides a programming-controlled device 200 at a device end. As shown in FIG. 2, the programming-controlled device 200 may include at least one programmable execution component 210 and an intelligent control 220, where the intelligent control 220 is communicatively connected to the at least one execution component 210. The programmable execution component 210 is a program-controlled hardware component on the device 200. The intelligent control 220 may be configured to communicatively connect to a wireless communication module 130 in a visual programming control apparatus 100. In an embodiment, the at least one execution component 210 may be connected to the intelligent control 220 by using a communications bus, for example, a controller area network (CAN) bus, and the programming-controlled device 200 supports the pluggability of the execution component 210. When the execution component 210 is mounted to the CAN bus, a communication connection between the execution component 210 and the intelligent control 220 can be implemented. The intelligent control 220 may perform wireless communication; for example, perform communication by using Wi-Fi. For an embodiment in which the device 200 is a mobile model vehicle, as shown in FIG. 1, at least one programmable execution component 210 may include at least one of a chassis 211, an armor 212, a gimbal 213, a water gun 214, an audio effect component (not shown), and a visual component (not shown).

When programming control is performed on the device 200, the intelligent control 220 may upload a synchronization status message indicating whether an execution component 210 associated with an object block 151 (as shown in FIG. 3 and FIG. 4) provided by the visual programming control apparatus 100 has been mounted to the device 200; in a synchronized state in which the associated execution component 210 has been mounted to the device 200, a control instruction from the visual programming control apparatus 100 may be received; and an operation of the corresponding execution component 210 of the device 200 may be controlled based on the control instruction.

In some implementations, the intelligent control 220 may receive a synchronization query instruction from the visual programming control apparatus 100, and upload the synchronization status message in response to the synchronization query instruction. For example, if a user compiles a program segment in the visual programming control apparatus 100 by using a gimbal object block, a chassis object block and a water gun object block, the visual programming control apparatus 100 may send a synchronization query instruction for the program segment to the device 200; and after receiving the synchronization query instruction, the intelligent control 220 detects synchronization statuses of the execution components 210 corresponding to the object blocks in the program, and uploads a synchronization status message. The synchronization status message may include whether versions are synchronized, whether there is synchronization, or the like. For example, when the water gun is removed by the user from the mobile model vehicle or a hardware version of the water gun is inconsistent, a synchronization status message of an execution component of the water gun would be "unsynchronized". Correspondingly, after the visual programming control apparatus 100 receives the synchronization status message, the corresponding water gun object block may also be displayed as "unsynchronized", and therefore the user is prompted to modify a program or mount a water gun in order to correctly execute the program.

In an embodiment of the present invention, the device 200 may further download an existing engineering file from the visual programming control apparatus 100. The engineering file is generated by the visual programming control apparatus 100 during programming and includes an execution program generated for a selected object block during programming.

In an embodiment of the present invention, the device 200 may further include a device-end wireless communication module 230. The device-end wireless communication module 230 may include an image transmission module 231. The image transmission module 231 is communicatively connected to the intelligent control 220, and the image transmission module 231 may transmit an image shot by the device 200 to the wireless communication module 130 of the visual programming control apparatus 100. The image transmission module 231 may send, to the visual programming control apparatus 100 in response to the control of the intelligent control 220, an image or video shot by the mobile model vehicle.

In another embodiment of the present invention, the device-end wireless communication module 230 in the device 200 may further include a device status push module 232. The device status push module 232 is communicatively connected to the intelligent control 220, and the device status push module 232 may push a device operation status of the device 200 to the visual programming control apparatus 100. The device status push module 232 may send a device operation status of the mobile model vehicle to the visual programming control apparatus 100 in response to the control of the intelligent control 220. The device operation status may include a status of each execution component 210, for example, include but is not limited to the following: a status of the chassis may include whether the chassis is blocked; a status of the water gun may include a firing frequency, single shot or multiple shots, and the number of water bombs in each shot; and a status of the armor may include whether the armor is attacked, a code of the armor that is attacked, armor detection sensitivity, how much health the armor left, and the like. It may be understood that the device status push module 232 may push the status in response to a control program written by the user, for example, if the user write or adds an object block in the program, a status of the object block may be pushed to the user; or the status pushing may be made as a default or changeable setting of the device, for example, which status information to push may be set independently of programming.

In this embodiment of the present invention, two different communication links may be used for programming control on the device 200 and image transmission and status pushing of the device 200.

In another embodiment of the present invention, the intelligent control 220 may further upload a mounting status message indicating whether the execution component 210 of the device 200 has been mounted to the device 200.

In another embodiment of the present invention, the intelligent control 220 may further receive a pause instruction sent by the visual programming control apparatus 100 to control the corresponding execution component 210 of the device 200 to pause execution in response to the pause instruction; and after the pause is over, return, to the visual programming control apparatus 100, a message confirming that the pause of the device is over.

Based on system considerations, an embodiment of the present invention may provide a programming control system. FIG. 2 is a schematic block diagram of an embodiment of a programming control system according to the present invention. As shown in FIG. 2, the programming control system in this embodiment of the present invention may include the foregoing device 200 and the foregoing visual programming control apparatus 100 for performing programming control on the device 200.

The device 200 may include at least one programmable execution component 210 and an intelligent control 220, where the intelligent control 220 is communicatively connected to the at least one execution component 210. The visual programming control apparatus 100 may include a memory 110 adapted to store a plurality of program instructions, a processor 120, and a wireless communication module 130. When the program instructions stored in the memory 110 are executed by the processor 120, the processor 120 may provide a visual programming interface 150, as shown in FIG. 3 and FIG. 4, where the visual programming interface 150 may include a plurality of object blocks 151, and each object block 151 is configured to associate with the at least one execution component 210; provide a related program block 152 for a selected object block 151, and generate an execution program for the selected object block 151 based on the program block 152 on the visual programming interface 150; and generate, based on the execution program, a control instruction for controlling the device 200. The wireless communication module 130 may send the control instruction to the device 200. Correspondingly, the intelligent control 220 may receive the control instruction from the visual programming control apparatus 100, and control an operation of a corresponding execution component 210 of the device 200 based on the control instruction.

In an embodiment, the processor 120 may query a status of synchronization between the selected object block 151 and an associated execution component 210 in the device 200; the intelligent control 220 uploads a synchronization status message indicating whether the execution component 210 associated with the selected object block 151 has been mounted to the device 200; the processor 120 receives, from the intelligent control 220, the synchronization status message indicating whether the execution component 210 associated with the selected object block 151 has been mounted to the device 200; and when receiving the synchronization status message indicating that the associated execution component 210 has been mounted to the device 200, the wireless communication module 130 may send the control instruction to the device 200.

In another embodiment, the device 200 may further include an image transmission module 231, where the image transmission module 231 transmits an image shot by the device 200 to the visual programming control apparatus 100; and the processor 120 may receive, by using the wireless communication module 130, the image shot by the device 200, and may display the image on the visual programming interface 150, as shown in FIG. 4. Alternatively, the processor 120 may first perform image recognition on the received image, and then display the recognized image on the visual programming interface 150.

In another embodiment, the device 200 may further include a device status push module 232, where the device status push module 232 may push a device 200 operation status of the device 200 to the visual programming control apparatus 100; and the processor 120 receives, by using the wireless communication module 130, an operation status message of the device 200 pushed by the device 200, and displays the device operation status on the visual programming interface 150, as shown in FIG. 4.

In another embodiment, the intelligent control 220 may upload a mounting status message indicating whether the execution component 210 of the device 200 has been mounted to the device 200. The processor 120 may receive the mounting status message of the execution component 210 from the device 200; when the execution component 210 has been mounted to the device 200, the object block 151 associated with the execution component 210 and the program block 152 may be shown as available on the visual programming interface 150; and when the execution component 210 has not been mounted to the device 200, the object block 151 associated with the execution component 210 and the program block 152 may be shown as unavailable on the visual programming interface 150.

For other features of the device 200 and the visual programming control apparatus 100 in the programming control system in this embodiment of the present invention, reference may be made to the foregoing descriptions. Details will not be described again herein. In addition, the programming control system in this embodiment of the present invention may have a similar beneficial technical effect as the foregoing visual programming control apparatus, and therefore will not be further described herein.

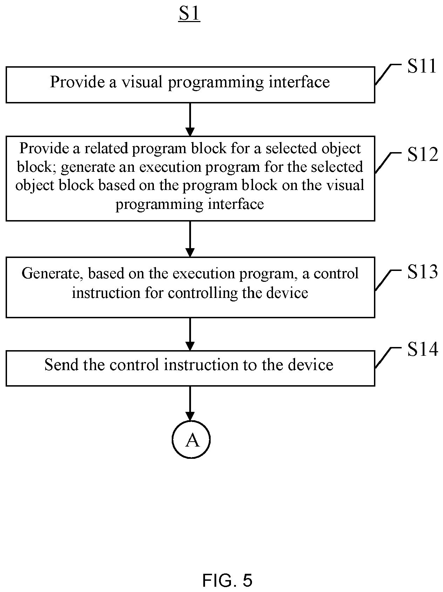

FIG. 5 is a flowchart of an embodiment of a method used for a visual programming control device at a control end according to the present invention. As shown in FIG. 5, at the control end, the method S1 used for the visual programming control device in this embodiment of the present invention may include step S11 to step S14.

Step S11: Provide a visual programming interface 150. As shown in FIG. 3 and FIG. 4, the visual programming interface 150 includes a plurality of object blocks 151, and each object block 151 is configured to associate with at least one programmable execution component included in a device, so as to associate a hardware module with a corresponding software module.

Step S12: Provide a related program block 152 for a selected object block 151, as shown in FIG. 3 and FIG. 4, and generate an execution program for the selected object block 151 based on the program block 152 on the visual programming interface 150.

In an embodiment, that an execution program is generated for the selected object block 151 based on the program block 152 may include: obtain an operation of dragging the program block 152 on the visual programming interface 150, and generate an execution program for the selected object block 151 based on a result of the operation of dragging the program block 152.

Step S13: Generate, based on the execution program, a control instruction for controlling the device.

Step S14: Send the control instruction to the device.

In the method used for the visual programming control device in this embodiment of the present invention, for a programmable hardware module, a corresponding software module associated with the programmable hardware module may be designed and developed, and programming is further performed for the software module, to generate a corresponding control instruction for controlling the programmable hardware module, thereby providing support and programming control for designing a modular product.

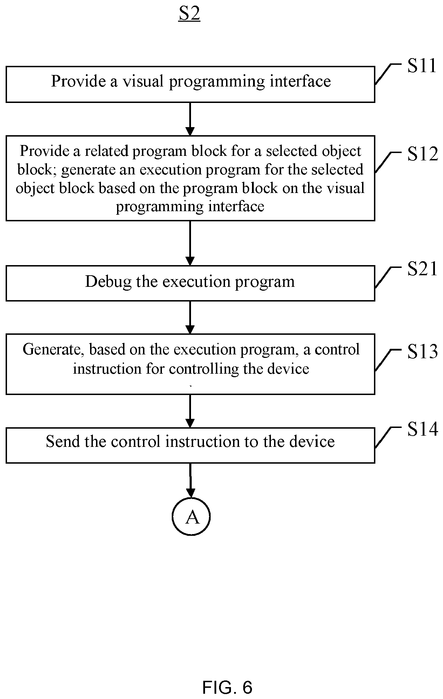

FIG. 6 is a flowchart of another embodiment of a method used for a visual programming control device at a control end according to the present invention. As shown in FIG. 6, the method S2 used for the visual programming control device in this embodiment of the present invention may further include step S21 on the basis of FIG. 5.

Step S21: Debug the execution program. Then the process proceeds to step S13. In such a case, in step S13: generate a control instruction based on the debugged execution program.

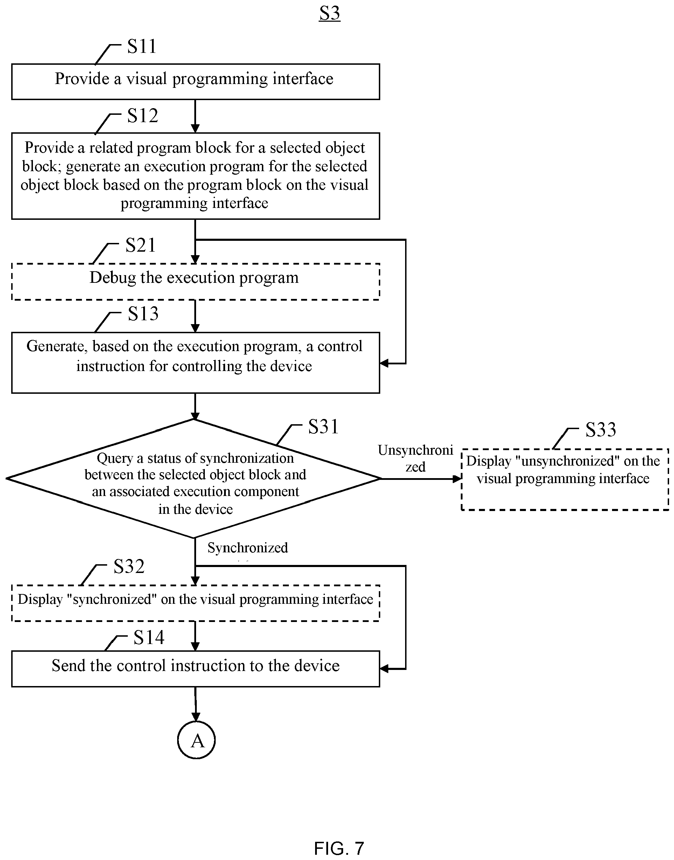

FIG. 7 is a flowchart of another embodiment of a method used for a visual programming control device at a control end according to the present invention. As shown in FIG. 7, the method S3 used for the visual programming control device in this embodiment of the present invention may further include step S31 on the basis of FIG. 5 or FIG. 6.

Step S31: Query a status of synchronization between the selected object block 151 and an associated execution component in the device, and receive a synchronization status message indicating whether the execution component associated with the selected object block 151 has been mounted to the device. The process proceeds to step S14 only when the synchronization status message indicating that the associated execution component has been mounted to the device is received. Step S14: Send the control instruction to the device.

In an embodiment, the method S3 used for the visual programming control device in this embodiment of the present invention may further include step S32 and step S33.

Step S32: When receiving the synchronization status message indicating that the associated execution component has been mounted to the device, display "synchronized" on the visual programming interface 150, as shown in FIG. 4.

Step S33: When receiving the synchronization status message indicating that the associated execution component has not been mounted to the device, display "unsynchronized" on the visual programming interface 150, as shown in FIG. 3.

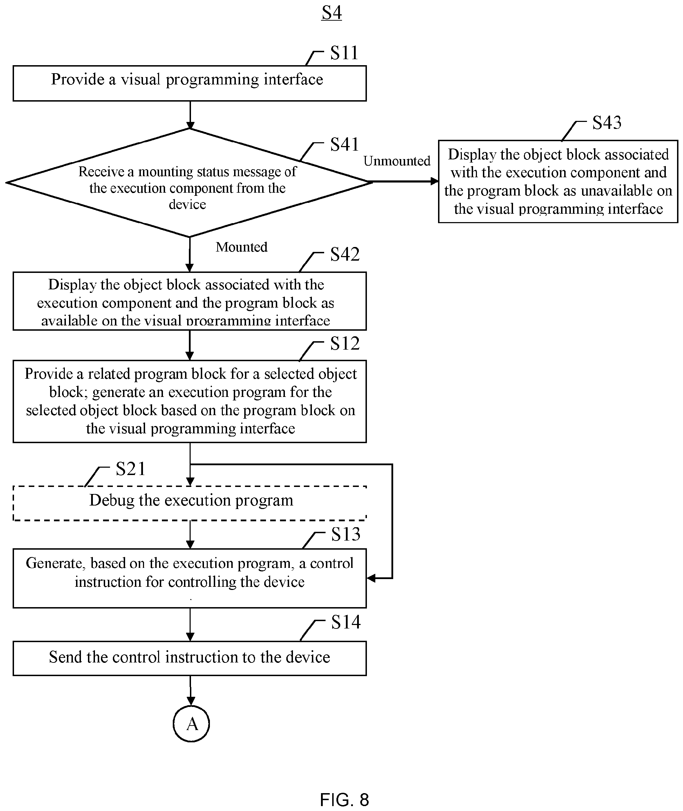

FIG. 8 is a flowchart of another embodiment of a method used for a visual programming control device at a control end according to the present invention. As shown in FIG. 8, the method S4 used for the visual programming control device in this embodiment of the present invention may further include step S41 to step S43 on the basis of FIG. 5 or FIG. 6.

Step S41: Receive a mounting status message of the execution component from the device.

When the execution component has been mounted to the device, the process proceeds to step S42. Step S42: Display the object block 151 associated with the execution component and the program block 152 as available on the visual programming interface 150.

When the execution component has not been mounted to the device, the process proceeds to step S43. Step S43: Display the object block 151 associated with the execution component and the program block 152 as unavailable on the visual programming interface 150.

The foregoing can help a user select the valid object block 151 and program block 152 more intuitively, and improve the programming efficiency.

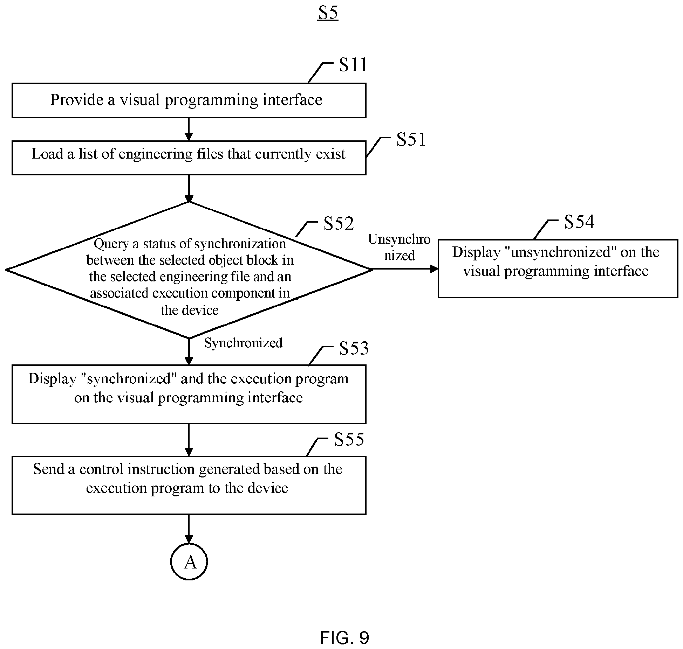

FIG. 9 is a flowchart of another embodiment of a method used for a visual programming control device at a control end according to the present invention. As shown in FIG. 9, the method S5 used for the visual programming control device in this embodiment of the present invention may further include step S51 to step S55 after step S11.

Step S51: Load a list of engineering files that currently exist, where the engineering file is generated at each time of programming, and the engineering file includes an execution program generated for a selected object block 151 at each time of programming.

When any one of the existing engineering files is selected, the process proceeds to step S52. Step S52: Query a status of synchronization between the selected object block 151 in the selected engineering file and an associated execution component in the device, and receive a synchronization status message indicating whether the execution component associated with the selected object block 151 has been mounted to the device.

When the synchronization status message indicating that the associated execution component has been mounted to the device is received, the process proceeds to step S53. Step S53: Display "synchronized" and the execution program on the visual programming interface 150. Then the process proceeds to step S55.

When the synchronization status message indicating that the associated execution component has not been mounted to the device is received, the process proceeds to step S54. Step S54: Display "unsynchronized" on the visual programming interface 150.

Step S55: In a synchronized state in which the associated execution component has been mounted to the device, send a control instruction generated based on the execution program to the device.

In this embodiment, it would be convenient for a user to selectively invoke an existing execution program stored in the apparatus to control the device, without manual programming.

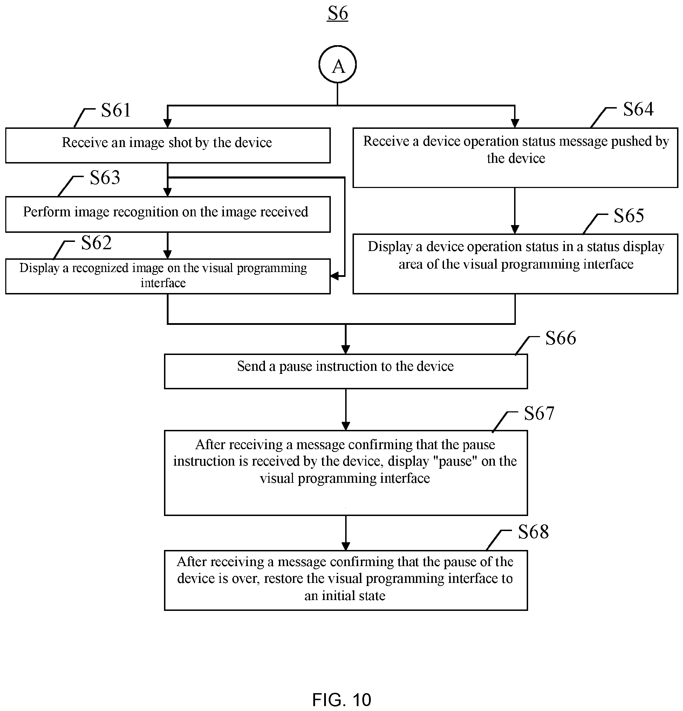

FIG. 10 is a flowchart of another embodiment of a method used for a visual programming control device at a control end according to the present invention. As shown in FIG. 10, the method S6 used for the visual programming control device in this embodiment of the present invention may further include step S61 and step S62 on the basis of the foregoing embodiments.

Step S61: Receive an image shot by the device.

Step S62: Display the image 300 in an image display area 153 of the visual programming interface 150, as shown in FIG. 4. Therefore, visual programming is combined with image transmission and displaying to achieve a more intuitive device operation experience.

In an embodiment, the method S6 used for the visual programming control device in this embodiment of the present invention may further include step S63. Step S63: Perform image recognition on the image received in step S61. Then the process proceeds to step S62. Step S62: Display a recognized image on the visual programming interface.

In another embodiment, the method S6 used for the visual programming control device in this embodiment of the present invention may further include step S64 and step S65 on the basis of the foregoing embodiments.

Step S64: Receive a device operation status message pushed by the device.

Step S65: Display a device operation status in a status display area 154 of the visual programming interface 150. Therefore, visual programming is combined with the device operation status, and a device operation result can be viewed in time. This facilitates the user in locating and analyzing a programming problem.

In another embodiment, the method S6 used for the visual programming control device in this embodiment of the present invention may further include step S66 to step S68 on the basis of the foregoing embodiments.

Step S66: Send a pause instruction to the device.

Step S67: After receiving a message confirming that the pause instruction is received by the device, display "pause" on the visual programming interface 150.

Step S68: After receiving a message confirming that the pause of the device is over, restore the visual programming interface 150 to an initial state.

An embodiment of the present invention further provides a computer-readable storage medium. The computer-readable storage medium is adapted to store a plurality of program instructions. When the program instructions are executed by a processor, steps of the method used for the visual programming control device according to any one of the foregoing embodiments are performed.

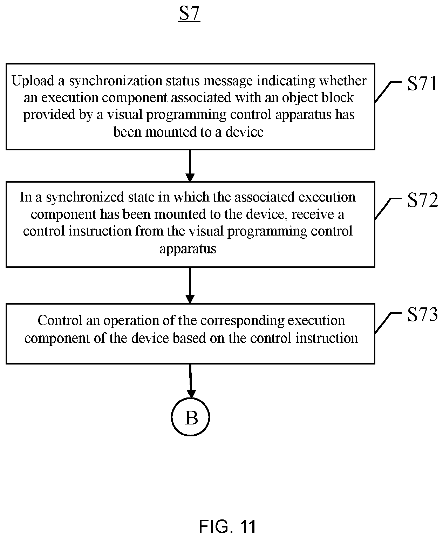

FIG. 11 is a flowchart of an embodiment of a method used for a visual programming control device at a device end according to the present invention. As shown in FIG. 11, at the device end, the method S7 used for the visual programming control device in this embodiment of the present invention may include step S71 to step S73.

Step S71: Upload a synchronization status message indicating whether an execution component associated with an object block 151 provided by a visual programming control apparatus has been mounted to a device.

Step S72: In a synchronized state in which the associated execution component has been mounted to the device, receive a control instruction from the visual programming control apparatus.

Step S73: Control an operation of the corresponding execution component of the device based on the control instruction.

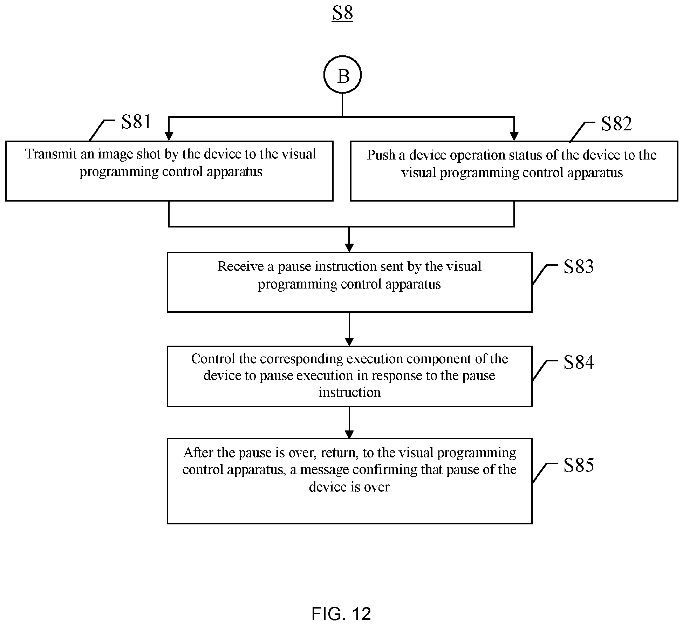

FIG. 12 is a flowchart of another embodiment of a method used for a visual programming control device at a device end according to the present invention. As shown in FIG. 12, the method S8 used for the visual programming control device in this embodiment of the present invention may further include step S81 on the basis of FIG. 11.

Step S81: Transmit an image shot by the device to the visual programming control apparatus.

In an embodiment, the method S8 used for the visual programming control device in this embodiment of the present invention may further include step S82 on the basis of FIG. 11.

Step S82: Push a device operation status of the device to the visual programming control apparatus.

In another embodiment, the method S8 used for the visual programming control device in this embodiment of the present invention may further include step S83 to step S85 on the basis of the foregoing embodiments.

Step S83: Receive a pause instruction sent by the visual programming control apparatus.

Step S84: Control the corresponding execution component of the device to pause execution in response to the pause instruction.

Step S85: After the pause is over, return, to the visual programming control apparatus, a message confirming that pause of the device is over.

In some embodiments of the present invention, the methods S7 and S8 used for the visual programming control device in the embodiments of the present invention may further include: uploading a mounting status message indicating whether the execution component of the device has been mounted to the device.

Specific operations and execution processes of the method used for the visual programming control device in this embodiment of the present invention are similar to those of the foregoing visual programming control apparatus and programming control system, and beneficial technical effects thereof are similar to those of the foregoing visual programming control apparatus and programming control system. Therefore, details will not be described again herein. Under a condition that no conflict occurs, the method used for the visual programming control device in this embodiment of the present invention may use or include specific operations and embodiments or implementations of execution processes of the foregoing visual programming control apparatus and programming control system.

It should be noted that the relational terms such as "first" and "second" in this specification are used only to differentiate an entity or operation from another entity or operation, and do not require or imply any actual relationship or sequence between these entities or operations. The term "comprise", "include", or any other variant thereof is intended to cover a non-exclusive inclusion, so that a process, a method, an article, or an apparatus that includes a list of elements not only includes those elements but also includes other elements that are not explicitly listed, or further includes elements inherent to such process, method, article, or apparatus. In absence of further constraints, an element preceded by "includes a ..." does not preclude the existence of other identical elements in the process, method, article, or device that includes the element.

The visual programming control apparatus, the programming-controlled device, the method used for the visual programming control device, the computer-readable storage medium, and the programming control system provided by the embodiments of the present invention have been described in detail above. Although the principles and implementations of the present invention are described by using specific examples in this specification, the description of the embodiments is intended only to help understand the method and core idea of the present invention. Therefore, content of this specification shall not be construed as a limitation on the present invention. In addition, any modification, equivalent replacement, improvement, or the like made by a person of ordinary skill in the art based on the idea of the present invention with respect to the specific implementations and the application scope of the present invention shall all fall within the scope of the claims of the present invention.

## Claims

1. A visual programming control apparatus, configured to control a device including at least one programmable execution component, **characterized in that**, the visual programming control apparatus comprises:
a memory, adapted to store a plurality of program instructions;
a processor, wherein when the plurality of program instructions are executed by the processor, the processor is configured to:
provide a visual programming interface, wherein the visual programming interface includes a plurality of object blocks, and each of the plurality of object blocks is configured to associate with the at least one execution component;
provide a related program block for a selected object block, and generate an execution program for the selected object block based on the program block on the visual programming interface; and
generate, based on the execution program, a control instruction for controlling the device; and
a wireless communication module, configured to send the control instruction.

2. The visual programming control apparatus according to claim 1, **characterized in that**, that the processor is configured to generate the execution program for the selected object block based on the program block includes: the processor is configured to obtain an operation of dragging the program block on the visual programming interface, and generate the execution program for the selected object block based on a result of the operation of dragging the program block.

3. The visual programming control apparatus according to claim 1, **characterized in that**, the processor is further configured to:
debug the execution program, and generate the control instruction based on the debugged execution program.

4. The visual programming control apparatus according to claim 1, **characterized in that**, the processor is further configured to:
query a status of synchronization between the selected object block and an associated execution component in the device, and receive a synchronization status message indicating whether the execution component associated with the selected object block has been mounted to the device; and
wherein, upon receiving the synchronization status message indicating that the associated execution component has been mounted to the device, send the control instruction.

5. The visual programming control apparatus according to claim 4, **characterized in that**, the processor is further configured to:
upon receiving the synchronization status message indicating that the associated execution component has been mounted to the device, display "synchronized" on the visual programming interface; and
upon receiving the synchronization status message indicating that the associated execution component has not been mounted to the device, display "unsynchronized" on the visual programming interface.

6. The visual programming control apparatus according to claim 1, **characterized in that**, the processor is further configured to:
receive, via the wireless communication module, an image shot by the device.

7. The visual programming control apparatus according to claim 6, **characterized in that**, the processor is further configured to:
display the image on the visual programming interface.

8. The visual programming control apparatus according to claim 6, **characterized in that**, the processor is further configured to:
perform image recognition on the image received, and display a recognized image on the visual programming interface.

9. The visual programming control apparatus according to any one of claims 1 to 8, **characterized in that**, the processor is further configured to:
receive, via the wireless communication module, a device operation status message pushed by the device, and display the device operation status on the visual programming interface.

10. The visual programming control apparatus according to claim 1, **characterized in that**, the processor is further configured to:
receive a mounting status message of the execution component from the device;
when the execution component has been mounted to the device, display the object block associated with the execution component and the program block as available on the visual programming interface; and
when the execution component has not been mounted to the device, display the object block associated with the execution component and the program block as unavailable on the visual programming interface.

11. The visual programming control apparatus according to claim 1, **characterized in that**, the processor is further configured to:
generate an engineering file based on the execution program, wherein the engineering file includes the execution program.

12. The visual programming control apparatus according to claim 11, **characterized in that**, the engineering file further includes at least one of software version information of the visual programming control apparatus, hardware version information of the visual programming control apparatus, software version information of the device, hardware version information of the device, or hardware information of the at least one execution component of the device.

13. The visual programming control apparatus according to claim 11, **characterized in that**, the visual programming control apparatus is further configured to share or transmit the engineering file to another visual programming control apparatus.

14. The visual programming control apparatus according to claim 13, **characterized in that**, the visual programming control apparatus is configured to:
when the engineering file is shared or transmitted to the another visual programming control apparatus, recognize whether the another visual programming control apparatus satisfies a software version requirement of the engineering file, and when the another visual programming control apparatus does not satisfy the software version requirement of the engineering file, provide corresponding warning information.

15. The visual programming control apparatus according to claim 11, **characterized in that**, when the visual programming control apparatus is connected to the device, the visual programming control apparatus is configured to: recognize whether hardware version information of the device satisfies a hardware version requirement of a device storing the engineering file, and when the hardware version information of the device does not satisfy the hardware version requirement of the device storing the engineering file, provide corresponding warning information.

16. The visual programming control apparatus according to claim 1, **characterized in that**, when a new programmable execution component is added to the device, the visual programming control apparatus is configured to add an object block associated with the new execution component.

17. The visual programming control apparatus according to claim 1, **characterized in that**, when hardware and software of a programmable execution component of the device are upgraded, the visual programming control apparatus is configured to perform recognition based on software and hardware versions of the execution component, and upgrade an object block associated with the execution component.

18. The visual programming control apparatus according to claim 1, **characterized in that**, the wireless communication module is a Wi-Fi communication module.

19. The visual programming control apparatus according to claim 1, **characterized in that**, the visual programming control apparatus is developed based on a Scratch programming framework.

20. The visual programming control apparatus according to claim 1, **characterized in that**, the visual programming control apparatus comprises a mobile terminal, a personal computer, or a visual remote control.

21. A method for a visual programming control device, **characterized in that**, comprising the following steps:
providing a visual programming interface, wherein the visual programming interface includes a plurality of object blocks, and each of the plurality of object block is configured to associate with at least one execution component included in the device;
providing a related program block for a selected object block, and generating an execution program for the selected object block based on the program block on the visual programming interface;
generating, based on the execution program, a control instruction for controlling the device; and
sending the control instruction to the device.

22. The method according to claim 21, **characterized in that**, the generating of the execution program for the selected object block based on the program block includes: obtaining an operation of dragging the program block on the visual programming interface, and generating the execution program for the selected object block based on a result of the operation of dragging the program block.

23. The method according to claim 21, **characterized in that**, further comprising:
debugging the execution program, and generating the control instruction based on the debugged execution program.

24. The method according to claim 21, **characterized in that**, further comprising:
querying a status of synchronization between the selected object block and an associated execution component in the device, and receiving a synchronization status message indicating whether the execution component associated with the selected object block has been mounted to the device; and
upon receiving the synchronization status message indicating that the associated execution component has been mounted to the device, sending the control instruction.

25. The method according to claim 24, **characterized in that**, further comprising:
upon receiving the synchronization status message indicating that the associated execution component has been mounted to the device, displaying "synchronized" on the visual programming interface; and
upon receiving the synchronization status message indicating that the associated execution component has not been mounted to the device, displaying "unsynchronized" on the visual programming interface.

26. The method according to claim 21, **characterized in that**, further comprising:
receiving a mounting status message of the execution component from the device;
when the execution component has been mounted to the device, displaying the object block associated with the execution component and the program block as available on the visual programming interface; and
when the execution component has not been mounted to the device, displaying the object block associated with the execution component and the program block as unavailable on the visual programming interface.

27. The method according to claim 21, **characterized in that**, further comprising:
receiving an image shot by the device.

28. The method according to claim 27, **characterized in that**, further comprising:
displaying the image on the visual programming interface.

29. The method according to claim 27, **characterized in that**, further comprising:
performing image recognition on the received image, and displaying an recognized image on the visual programming interface.

30. The method according to any one of claims 21 to 29, **characterized in that**, further comprising:
receiving a device operation status message pushed by the device, and displaying the device operation status on the visual programming interface.

31. The method according to claim 21, **characterized in that**, further comprising:
loading a list of engineering files currently existing, wherein the engineering files are generated at each time of programming, and the engineering files includes an execution program generated for a selected object block at each time of programming;
upon selecting any one of the engineering files currently existing, querying a status of synchronization between the selected object block in the selected engineering file and an associated execution component in the device, and receiving a synchronization status message indicating whether the execution component associated with the selected object block has been mounted to the device;
upon receiving the synchronization status message indicating that the associated execution component has been mounted to the device, displaying "synchronized" and the execution program on the visual programming interface, upon receiving the synchronization status message indicating that the associated execution component has not been mounted to the device, displaying "unsynchronized" on the visual programming interface; and
upon receiving the synchronization status message indicating that the associated execution component has been mounted to the device, sending a control instruction generated based on the execution program to the device.

32. The method according to claim 21, **characterized in that**, further comprising:
sending a pause instruction to the device;
after receiving a message confirming that the pause instruction is received by the device, displaying "pause" on the visual programming interface; and
after receiving a message confirming that the pause of the device is over, restoring the visual programming interface to an initial state.

33. A computer-readable storage medium, adapted to store a plurality of program instructions, **characterized in that**, when the program instructions are executed by the processor, steps of the method for the visual programming control device according to any one of claims 21 to 32 are performed.

34. A programming-controlled device, **characterized in that**, comprising:
at least one programmable execution component; and
an intelligent control, communicatively connected to the at least one execution component, wherein the intelligent control is configured to:
upload a synchronization status message indicating whether an execution component associated with an object block provided by a visual programming control apparatus has been mounted to the device;
in a synchronized state in which the associated execution component has been mounted to the device, receive a control instruction from the visual programming control apparatus; and
control an operation of the corresponding execution component of the device based on the control instruction.

35. The programming-controlled device according to claim 24, **characterized in that**, the intelligent control is further configured to receive a synchronization query instruction from the visual programming control apparatus, and upload the synchronization status message in response to the synchronization query instruction.

36. The programming-controlled device according to claim 34, **characterized in that**, the synchronization status message includes at least one of whether versions are synchronized or whether there is synchronization.

37. The programming-controlled device according to claim 34, **characterized in that**, further comprising:
an image transmission module, configured to transmit an image shot by the device to the visual programming control apparatus.

38. The programming-controlled device according to claim 37, **characterized in that**, the image transmission module is configured to transmit the image in response to a control from the intelligent control.

39. The programming-controlled device according to any one of claims 34 to 38, **characterized in that**, further comprising:
a device status push module, configured to push a device operation status of the device to the visual programming control apparatus.

40. The programming-controlled device according to claim 39, **characterized in that**, the device status push module is configured to push the device operation status in response to the control from the intelligent control.

41. The programming-controlled device according to claim 39, **characterized in that**, the device status push module is configured to push the device operation status in response to a control program coded by a user.

42. The programming-controlled device according to claim 39, **characterized in that**, the device operation status includes a status of the at least one execution component.

43. The programming-controlled device according to claim 34, **characterized in that**, the intelligent control is further configured to:
upload a mounting status message indicating whether the execution component of the device has been mounted to the device.

44. The programming-controlled device according to claim 34, **characterized in that**, the device is further configured to: download an engineering file that exits from the visual programming control apparatus, wherein the engineering file is generated by the visual programming control apparatus during programming and includes an execution program generated for a selected object block during programming.

45. The programming-controlled device according to claim 34, **characterized in that**, the intelligent control is further configured to:
receive a pause instruction sent by the visual programming control apparatus;
control the corresponding execution component of the device to pause in response to the pause instruction; and
after the pause is over, return, to the visual programming control apparatus, a message confirming that pause of the device is over.

46. The programming-controlled device according to claim 34, **characterized in that**, the device comprises a mobile model vehicle.

47. The programming-controlled device according to claim 46, **characterized in that**, the at least one execution component includes at least one of a chassis, an armor, a gimbal, a water gun, an audio effect component, or a visual component.

48. The programming-controlled device according to claim 34, **characterized in that**, the intelligent control performs wireless communication based on Wi-Fi.

49. The programming-controlled device according to claim 34, **characterized in that**, the at least one execution component is connected to the intelligent control via a communications bus.

50. The programming-controlled device according to claim 49, **characterized in that**, the communications bus is a controller area network (CAN) bus.

51. A method for a visual programming controlled device, **characterized in that**, comprising the following steps:
uploading a synchronization status message indicating whether an execution component associated with an object block provided by a visual programming control apparatus has been mounted to the device;
in a synchronized state in which the associated execution component has been mounted to the device, receiving a control instruction from the visual programming control apparatus; and
controlling an operation of the corresponding execution component of the device based on the control instruction.

52. The method according to claim 51, **characterized in that**, further comprising:
receiving a synchronization query instruction from the visual programming control apparatus, and uploading the synchronization status message in response to the synchronization query instruction.

53. The method according to claim 51, **characterized in that**, further comprising:
transmitting an image shot by the device to the visual programming control apparatus.

54. The method according to any one of claims 51 to 53, **characterized in that**, further comprising:
pushing a device operation status of the device to the visual programming control apparatus.

55. The method according to claim 51, **characterized in that**, further comprising:
uploading a mounting status message indicating whether the execution component of the device has been mounted to the device.

56. The method according to claim 51, **characterized in that**, further comprising:
downloading an engineering file that exists from the visual programming control apparatus, wherein the engineering file is generated by the visual programming control apparatus during programming and includes an execution program generated for a selected object block during programming.

57. The method according to claim 51, **characterized in that**, further comprising:
receiving a pause instruction sent by the visual programming control apparatus;
controlling the corresponding execution component of the device to pause in response to the pause instruction; and
after the pause is over, returning, to the visual programming control apparatus, a message confirming that pause of the device is over.

58. A programming control system, **characterized in that**, comprising:
a device, including at least one programmable execution component and an intelligent control, wherein the intelligent control is communicatively connected to the at least one execution component; and
a visual programming control apparatus, including:
a memory, adapted to store a plurality of program instructions;
a processor, wherein when the program instructions are executed by the processor, the processor is configured to:
provide a visual programming interface, wherein the visual programming interface including a plurality of object blocks, and each of the plurality of object blocks is configured to associate with the at least one execution component;
provide a related program block for a selected object block, and generate an execution program for the selected object block based on the program block on the visual programming interface; and
generate, based on the execution program, a control instruction for controlling the device; and
a wireless communication module, configured to send the control instruction to the device; wherein
the intelligent control is configured to:
receive the control instruction from the visual programming control apparatus; and
control an operation of a corresponding execution component of the device based on the control instruction.

59. The programming control system according to claim 58, **characterized in that**, that the processor is configured to generate an execution program for the selected object block based on the program block includes: the processor is configured to obtain an operation of dragging the program block on the visual programming interface, and generate the execution program for the selected object block based on a result of the operation of dragging the program block.

60. The programming control system according to claim 58, **characterized in that**, the processor is further configured to:
debug the execution program, and generate the control instruction based on the debugged execution program.

61. The programming control system according to claim 58, **characterized in that**,
the processor is further configured to:
query a status of synchronization between the selected object block and an associated execution component in the device, and receive a synchronization status message indicating whether the execution component associated with the selected object block has been mounted to the device; and
upon receiving the synchronization status message indicating that the associated execution component has been mounted to the device, send the control instruction; and
the intelligent control is configured to:
upload the synchronization status message indicating whether the execution component associated with the selected object block has been mounted to the device.

62. The programming control system according to claim 61, **characterized in that**, the processor is further configured to:
upon receiving the synchronization status message indicating that the associated execution component has been mounted to the device, display "synchronized" on the visual programming interface; and
upon receiving the synchronization status message indicating that the associated execution component has not been mounted to the device, display "unsynchronized" on the visual programming interface.

63. The programming control system according to claim 58, **characterized in that**, the device further includes an image transmission module configured to transmit an image shot by the device to the visual programming control apparatus; and the processor is further configured to:
receive, via the wireless communication module, the image shot by the device.

64. The programming control system according to claim 63, **characterized in that**, the processor is further configured to:
display the image on the visual programming interface.

65. The programming control system according to claim 63, **characterized in that**, the processor is further configured to:
perform image recognition on the received image, and display a recognized image on the visual programming interface.

66. The programming control system according to any one of claims 58 to 65, **characterized in that**, the device further includes a device status push module configured to push a device operation status of the device to the visual programming control apparatus; and the processor is further configured to:
receive, via the wireless communication module, the device operation status message pushed by the device, and display the device operation status on the visual programming interface.

67. The programming control system according to claim 58, **characterized in that**,
the intelligent control is further configured to upload a mounting status message indicating whether the execution component of the device has been mounted to the device; and
the processor is further configured to:
receive the mounting status message of the execution component from the device;
when the execution component has been mounted to the device, display the object block associated with the execution component and the program block as available on the visual programming interface; and
when the execution component has not been mounted to the device, display the object block associated with the execution component and the program block as unavailable on the visual programming interface.

68. The programming control system according to claim 58, **characterized in that**, when a new programmable execution component is added to the device, the visual programming control apparatus is configured to add an object block associated with the new execution component.

69. The programming control system according to claim 58, **characterized in that**, when hardware and software of a programmable execution component of the device are upgraded, the visual programming control apparatus is configured to perform recognition based on software and hardware versions of the execution component, and upgrade an object block associated with the execution component.

70. The programming control system according to claim 58, **characterized in that**, the wireless communication module of the visual programming control apparatus is a Wi-Fi communication module, and the intelligent control performs wireless communication based on Wi-Fi.

71. The programming control system according to claim 58, **characterized in that**, the visual programming control apparatus is developed based on a Scratch programming framework.

72. The programming control system according to claim 58, **characterized in that**, the visual programming control apparatus includes a mobile terminal, a personal computer, or a visual remote control.

73. The programming control system according to claim 58, **characterized in that**, the device includes a mobile model vehicle.

74. The programming control system according to claim 73, **characterized in that**, the at least one execution component includes at least one of a chassis, an armor, a gimbal, a water gun, an audio effect component, or a visual component.

75. The programming control system according to claim 58, **characterized in that**, the at least one execution component is connected to the intelligent control via a communications bus.

76. The programming control system according to claim 75, **characterized in that**, the communications bus is a controller area network (CAN) bus.
